(19) Europäisches Patentamt
European Patent Office
Office européen des brevets

(11) Veröffentlichungsnummer: **0 208 987**
**B1**

(12) # EUROPÄISCHE PATENTSCHRIFT

(45) Veröffentlichungstag der Patentschrift: **26.04.89**

(51) Int. Cl.⁴: **B01J 37/18**
// B01J23/74

(21) Anmeldenummer: **86108979.5**

(22) Anmeldetag: **02.07.86**

(54) **Verfahren zur Herstellung von Katalysatoren und ihre Verwendung bei Hydrier- und Aminierreaktionen.**

(30) Priorität: **08.07.85 DE 3524330**

(43) Veröffentlichungstag der Anmeldung: **21.01.87 Patentblatt 87/4**

(45) Bekanntmachung des Hinweises auf die Patenterteilung: **26.04.89 Patentblatt 89/17**

(84) Benannte Vertragsstaaten: **BE CH DE FR GB IT LI NL**

(56) Entgegenhaltungen:
**FR-A-1 282 347**
**US-A-4 210 605**

(73) Patentinhaber: **BASF Aktiengesellschaft, Carl-Bosch-Strasse 38, D-6700 Ludwigshafen(DE)**

(72) Erfinder: **Baer, Karl, Dr., Kastanienweg 1, D-6940 Weinheim(DE)**
Erfinder: **Reiss, Wolfgang, Dr., Bannwasserstrasse 70, D-6700 Ludwigshafen(DE)**
Erfinder: **Schossig, Juergen, Dr., Rheinparkstrasse 3, D-6800 Mannheim 51(DE)**
Erfinder: **Toussaint, Herbert, Dr., Knietschstrasse 11, D-6710 Frankenthal(DE)**

**EP 0 208 987 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein neues Verfahren zur Herstellung von Katalysatoren, enthaltend eines der Metalle Eisen, Kobalt und Nickel oder deren Gemische durch Reduktion der jeweiligen Katalysatorvorstufe mit Wasserstoff in flüssiger Phase und in Gegenwart eines Redoxsystems.

Die Herstellung aktiver Hydrierungs- und Aminierungskatalysatoren auf Basis eines der Metalle Eisen, Kobalt und Nickel oder deren Gemische wird üblicherweise im Festbett durch Reduktion der jeweiligen Metalloxide bzw. ihrer Gemische mittels Wasserstoff in der Gasphase bei einer Temperatur von 270 bis 300°C und einem Druck von 1 bis 150 bar durchgeführt.

Diese Art der Aktivierung erfordert einen großen apparativen und zeitlichen Aufwand. So wird beispielsweise durch das mit Metalloxid gefüllte Reaktionsrohr zunächst Stickstoff in hoher Durchflußmenge (z.B. 425 $m^3$ pro $m^3$ Metalloxid) geleitet. Dabei wird die Stickstoffmenge im Kreislauf geführt und muß, z.B. mittels Elektrovorheizer, im oben genannten Temperaturbereich gehalten werden. Der zur Aktivierung (Reduktion) benötigte Wasserstoff, der speziell bei Eisenkatalysatoren in sehr großem Überschuß eingesetzt werden muß, kann nur sehr vorsichtig dosiert werden, da sonst örtliche Überhitzungen auftreten, die zur Sinterung des Katalysators führen.

Zudem bereiten die in der Gasphase reduzierten Katalysatoren häufig Schwierigkeiten bei der anschließenden Benetzung mit dem flüssigen Reagenz. Da die Benetzung meist nicht überall in gleichem Maße stattfindet, bilden sich zunächst Regionen mit Flüssigkeitsunterschuß aus. Durch zeitlich verzögerte Benetzung dieser Regionen können dort zu einem späteren Zeitpunkt, unter Umständen sogar erst im Laufe der Hydrier- oder Aminierreaktion, durch Freisetzung von Adsorptionswärme unerwünschte Temperatursteigerungen auftreten.

Gemäß dem Vorschlag der DE-A 2 900 384 soll nun die Reduktion der Katalysatorvorstufe mit organischen Verbindungen (anstelle von Wasserstoff) als Reduktionsmittel in inerter Atmosphäre stattfinden. Der Begriff organische Verbindungen umfaßt dabei u.a. gesättigte und ungesättigte Kohlenwasserstoffe, Alkohole, Aldehyde, Ketone, Carbonsäuren und Ester. Bei diesem Verfahren läßt man die organischen Reduktionsmittel in einem Temperaturbereich von 200 bis 800°C mit den Metalloxiden reagieren. Die organischen Verbindungen sollen zu Kohlendioxid und Wasser oxidiert werden. Dabei ist allerdings nicht auszuschließen, daß die durch partielle Oxidation sich bildenden Zwischenstufen in unkontrollierbaren Folgereaktionen zu schwerflüchtigen Endprodukten weiterreagieren, die den Katalysator teilweise desaktivieren. Zudem muß in diesem hohen Temperaturbereich (bis 800°C) mit einer Sinterung des Katalysators gerechnet werden.

Aufgabe der vorliegenden Erfindung war es, ein Verfahren vorzuschlagen, mit dem in einfacher Weise und mit vermindertem apparativen Aufwand, die Aktivierung dieser Katalysatoren vorgenommen werden kann.

Es wurde gefunden, daß die Herstellung von Katalysatoren, enthaltend eines der Metalle Eisen, Kobalt und Nickel oder deren Gemische, durch Reduktion der Katalysatorvorstufe, enthaltend eines der betreffenden Metalloxide oder deren Gemische, mittels Wasserstoff vorteilhaft gelingt, wenn man die Reduktion der in Suspension vorliegenden Katalysatorvorstufe bei einer Temperatur von 80 bis 260°C und einem Druck von 1 bis 300 bar, und in Gegenwart eines Redoxsystems durchführt.

Die zu reduzierenden Katalysatorvorstufen auf Basis eines der Oxide von Eisen, Kobalt und Nickel oder deren Gemische können entweder als Trägerkatalysatoren oder als trägerfreie Katalysatoren vorliegen und zusätzlich noch weitere Metalle bzw. deren Oxide enthalten.

Ihre Herstellung ist bekannt und beispielsweise in Ullmanns Encyklopädie der technischen Chemie, 4. Auflage, Band 13, S. 517 ff. beschrieben.

Erfindungsgemäß ist die Gegenwart eines Redoxsystems für die Durchführung der Reduktion mit Wasserstoff von besonderer Bedeutung.

Unter einem Redoxsystem soll im folgenden ein Stoffpaar (Red, Ox) verstanden werden, bei dem der Stoff (Red) durch das Metalloxid der Katalysatorvorstufe unter Dehydrierung reversibel zum Stoff (Ox) oxidiert wird, wobei sich aus dem entzogenen Wasserstoff und dem Oxidsauerstoff Wasser bildet. Der dehydrierte Stoff (Ox) wird dann mittels Wasserstoff reversibel wieder zum Ausgangsstoff (Red) hydriert.

Ein solches Stoffpaar dient bei der Aktivierung des Katalysators als Wasserstoffüberträger und geht im allgemeinen aus dem Aktivierungsprozeß unverändert hervor.

Normalerweise ist es ausreichend das Reduktionsverfahren in Gegenwart des Stoffes (Red) allein beginnen, da durch die einsetzende Dehydrierung von (Red) zwangsläufig (Ox) entsteht.

Prinzipiell kommen als Redoxsysteme alle reversibel dehydrierbaren und hydrierbaren organischen Verbindungen in Betracht, beispielsweise folgende Stoffpaare: Hydroxyverbindungen-Carbonylverbindungen, Amine-Imine oder gesättigte Kohlenwasserstoffverbindungen-ungesättigte Kohlenwasserstoffverbindungen.

Diese Redoxsysteme können in flüssigem oder festem Aggregatzustand vorliegen, wobei flüssige Stoffpaare bevorzugt sind. Bei Verwendung von festen Redoxsystemen werden diese in einem geeigneten Lösungsmittel gelöst. Flüssige Redoxsysteme können entweder in Substanz eingesetzt oder ebenfalls in einem zusätzlichen flüssigen Medium gelöst werden.

Als flüssiges Redoxsystem ist das Stoffpaar Hydroxyverbindungen-Carbonylverbindungen, insbesondere primärer Alkohol-Aldehyd und sekundärer Alkohol-Keton gut geeignet. Die formale Wechselbeziehung zwischen beiden Stoffpaaren ist in Gleichung (1) in allgemeiner Form wiedergegeben:

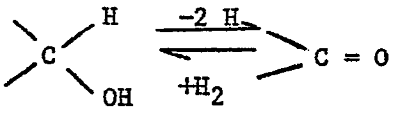 (1)

(Red) (Ox)

Besonders bevorzugt sind dabei die Stoffpaare, die aus geradkettigen, verzweigten oder cycloaliphatischen Mono- oder Polyalkoholen mit bis zu 8 Kohlenstoffatomen und den dazugehörigen Mono- oder Polyaldehyden bzw. -ketonen bestehen. Bei Polyalkoholen ist dabei auch eine partielle Dehydrierung möglich, d.h. nicht alle Hydroxygruppen werden oxidiert, so daß auch Komponenten, die Hydroxyl- und Carbonylgruppen gleichzeitig enthalten, denkbar sind. Beispielsweise lassen sich folgende Stoffpaare verwenden: Ethanol-Acetaldehyd, Isopropanol-Aceton, Butanol-Butanal, Cyclohexanol-Cyclohexanon, Ethan-1,2-diol-Glyoxal (Glykolaldehyd), Butan-1,4-diol-Butan-1,4-dial(Butan-1-al-4-ol), 2-Ethoxyethanol-2-Ethoxyethanal.

Als festes Redoxsystem kommt beispielsweise das Stoffpaar Hexan-1,6-diol-Hexan-1,6-dial (Hexan-1-al-6-ol) in Betracht.

Es ist von Vorteil, wenn die flüssigen Redoxsysteme wie auch die Lösungsmittel für feste Redoxsysteme eine gewisse Wasserlöslichkeit besitzen, um mindestens das bei der Reduktion entstehende Wasser lösen zu können. Sie sollten außerdem bei Zugabe von Wasser eine positive Lösungswärme zeigen. So kann die Lösungswärme als zusätzliche Energie für die Reduktion genutzt werden.

Für die oben genannten bevorzugten Stoffpaare sind diese Voraussetzungen erfüllt.

Geeignete Lösungsmittel für feste Redoxsysteme sind z.B. 1,4-Dioxan, 1,2-Dimethoxyethan, 1,2-Diethoxyethan. In manchen Fällen können auch wäßrige Lösungen verwendet werden.

Die genannten Lösungsmittel können beispielsweise auch als zusätzliche Lösungsmittel für flüssige Redoxsysteme verwendet werden.

Beim Arbeiten mit Lösungen von festen oder flüssigen Redoxsystemen ist es zweckmäßig, diese Redoxsysteme in einer Menge von 1 bis 50 Gew.-%, vorzugsweise 10 bis 30 Gew.-%, bezogen auf die Lösung, einzusetzen.

Man führt das erfindungsgemäße Verfahren zweckmäßig so durch, daß man die Katalysatorvorstufe, meist in Gegenwart eines Inertgases, z.B. Stickstoff, mit dem Redoxsystem (bzw. seiner Lösung) benetzt. Nach Erreichen der gewünschten Reaktionstemperatur wird das Inertgas gegen Wasserstoff ausgetauscht und der jeweilige Arbeitsdruck eingestellt. Dann wird das Redoxsystem gegen das zu hydrierende Substrat (sofern diese nicht identisch sind) oder gegen das zu aminierende Substrat ausgetauscht.

Die Reduktion findet erfindungsgemäß unter Bedingungen der flüssigen Phase bei einer Temperatur von 80 bis 260°C, vorzugsweise 130 bis 240°C, und einem Druck von 1 bis 300 bar, vorzugsweise 150 bis 250 bar, statt. Sie könnte im Prinzip auch bei einer Temperatur über 260°C durchgeführt werden, allerdings werden dabei keine besonderen Vorteile mehr erreicht.

Vorzugsweise wählt man die Temperatur- und Druckbedingungen so, daß auch das bei der Reduktion entstehende Wasser in flüssigem Aggregatzustand vorliegt. Dadurch kann die Kondensationswärme des Wassers ebenfalls als zusätzliche Energie für die Reduktion genutzt werden.

In einigen Fällen kann es von Vorteil sein, in Gegenwart von nur geringen Mengen Wasser zu arbeiten. Es empfiehlt sich dann, einen Teil des Reaktionsmediums auszuschleusen und durch wasserfreies Medium zu ersetzen.

Es ist vorteilhaft das erfindungsgemäße Verfahren mit hoher Flüssigkeitsbelastung (z.B. 30 bis 60 $m^3/m^2 \cdot h$) durchzuführen. Vorzugsweise wird die Flüssigkeitsbelastung so eingestellt, daß sie im Übergangsbereich zwischen Rieselbereich und pulsierender Strömung liegt.

Das erfindungsgemäße Verfahren kann sowohl in Festbettreaktoren wie auch in Fließbettreaktoren durchgeführt werden. Es kann weiterhin in kontinuierlicher wie auch diskontinuierlicher Arbeitsweise ausgeübt werden, wobei die kontinuierliche Arbeitsweise bevorzugt ist.

Mit dem neuen Verfahren läßt sich der Wärmehaushalt der Katalysatoraktivierung besonders gut regulieren. Dadurch wird eine optimale Temperaturführung am Katalysator erreicht. Durch das Arbeiten in flüssiger Phase kann der Temperaturbereich des Reduktionsvorgangs erniedrigt werden.

Ein weiterer Vorteil besteht darin, daß bei Umsetzungen, deren Endprodukt mit einem Partner des Redoxsystems identisch ist (z.B. Hydrierung von But-2-in-1,4-diol zu Butan-1,4-diol), sofort nach der Aktivierung des Katalysators, ohne daß das Reaktionsmedium auszuwechseln ist, mit der gewünschten Reaktion begonnen werden kann.

Die nach dem neuen Verfahren reduzierten Katalysatoren zeichnen sich, im Vergleich zu den auf übliche Weise erhaltenen, durch höhere Aktivität und Selektivität aus.

Sie können vorteilhaft bei der Hydrierung und Aminierung von organischen Verbindungen verwendet werden. Beispielhaft seien die Hydrierung von Kohlenstoff-Kohlenstoff-Mehrfachbindungen (z.B. Alkene und Alkine und deren Derivate), von Carbonylverbindungen (z.B. Aldehyde, Ketone, Carbonsäuren und deren Derivate) oder von Nitrilen bzw. die Aminierung von Alkoholen oder Aldehyden und Ketonen (reduktive Aminierung) genannt.

Die folgenden Beispiele sollen die Erfindung näher erläutern.

## Beispiel 1

In einen senkrecht stehenden Hochdruckreaktor mit zylinderförmigem Reaktionsraum wurden 10 Volumenteile eines Nickeloxid-Kupferoxid-Molybdänoxid-Aluminiumoxid-Katalysators eingefüllt. Der Metalloxid-Katalysator lag dabei in zylinderförmigen Partikeln mit einem Durchmesser von 6 mm und einer Höhe von 3 mm vor.

In Gegenwart von Stickstoff (Druck: 20 bar) wurde der Katalysator mit n-Butanol benetzt und durch

Zuführen der im Kreis geführten Flüssigkeit eine Flüssigkeitsbelastung von 60 $m^3/m^2 \cdot h$ eingestellt. Vor dem Aufheizen der Flüssigkeit auf 200°C wurde Stickstoff gegen Wasserstoff bei einer Abgasmenge von 200 Normalvolumenteile pro Std. ausgetauscht und ein Druck von 250 bar eingestellt. Nach der 24. Std. dauernden Reduktion des Metalloxid-Katalysators mit Wasserstoff bei 200°C und einer Flüssigkeitsbelastung von 60 $m^3/m^2$ wurde der Reaktorinhalt auf ca. 120°C abgekühlt. Danach wurde mit der kontinuierlichen Zufuhr von 6 Volumenteilen pro Std. einer wäßrigen 50%igen But-2-in-1,4-diollösung begonnen. Bei 160°C Reaktoraustrittstemperatur und 250 bar Gesamtdruck wurde ein Flüssigkeitsstrom von 60 $m^3/m^2 \cdot h$ im Kreis geführt. Gleichzeitig wurden 2500 Normalvolumenteile Wasserstoff im Kreis geführt. Die Analyse des Reaktoraustrages zeigte, daß Butindiol unter den genannten Hydrierungsbedingungen vollständig zu Butan-1,4-diol hydriert war.

Anstelle von n-Butanol kann Butan-1,4-diol oder Isopropanol mit gleicher Wirksamkeit als flüssiges Redoxsystem bei der Reduktion des oben angegebenen Nickeloxid-Kupferoxid-Molybdänoxid-Aluminiumoxid-Katalysators werden.

Beispiel 2

15 Volumenteile eines Kobaltoxid-Kupferoxid-Katalysators (Stränge 4 × 8 mm) wurden in einen entsprechend dimensionierten Hochdruck-Rohrreaktor gefüllt.

In Gegenwart von Stickstoff (250 bar) wurde der Katalysator innerhalb 3 Stunden mit 5¬10 Volumenteilen/h Isopropanol benetzt. Anschließend erhöhte man die Flüssigkeitsbelastung auf etwa 30 $m^3/m^2 \cdot h$ (Kreislauf-Fahrweise) und heizte auf 100°C. Bei dieser Temperatur wurde der Stickstoff schrittweise gegen Wasserstoff (250 bar, Abgas: 500 Normalvolumenteile/h) ausgetauscht.

Danach erwärmte man bei gleichbleibender Flüssigkeits- und Gasbelastung auf 200°C.

Die Reduktion des Katalysators fand anschließend unter folgenden Bedingungen statt:
Isopropanol-Frischzulauf: 1 Volumenteil pro Stunde
Flüssigkeitsrückführung: 30 $m^3/m^2 \cdot h$
Abgasmenge: 200 Normalvolumenteile pro Std.
Temperatur: 200°C
Druck: 250 bar
Reduktionsdauer: max. 96 h

Nach der Reduktion wurde die Temperatur auf max. 230°C erhöht und eine Adipinsäure-Lösung (Gehalt: 15 Gew.-% in Hexandiol/Wasser; der Produktstrom wurde von 10 auf 40 Volumenteile/h gesteigert) bei der oben genannten Flüssigkeitsrückführung, 3000 Normalvolumenteilen/h Kreisgas und einem Druck von 250 bar zu Hexan-1,6-diol hydriert.

Bei ausgezeichneter Selektivität wurde dabei diejenige Raum-Zeit-Ausbeute erreicht oder sogar übertroffen, die mit in der Gasphase reduzierten Katalysatoren (Reduktionstemperatur bis 310°C) erreicht wird.

Ähnliche Resultate werden bei Verwendung von Butanol, Isobutanol oder sec-Butanol als Kreislaufflüssigkeit bei der Flüssigphasenreduktion erhalten.

## Patentansprüche

1. Verfahren zur Herstellung von Katalysatoren, enthaltend eines der Metalle Eisen, Kobalt und Nickel oder deren Gemische, durch Reduktion der Katalysatorvorstufe, enthaltend eines der betreffenden Metalloxide oder deren Gemische, mittels Wasserstoff, dadurch gekennzeichnet, daß man die Reduktion der in Suspension vorliegenden Katalysatorvorstufe bei 80 bis 260°C und 1 bis 300 bar in Gegenwart eines Redoxsystems durchführt.

2. Verfahren gemäß Anspruch 1, dadurch gekennzeichnet, daß man als Redoxsystem ein Stoffpaar, bestehend aus einem geradkettigen, verzweigten oder cycloaliphatischen Mono- oder Polyalkohol mit bis zu 8 Kohlenstoffatomen und dem dazugehörigen Mono- oder Polyaldehyd bzw. -keton, verwendet.

3. Verfahren gemäß Anspruch 1, dadurch gekennzeichnet, daß man die Temperatur- und Druckbedingungen so wählt, daß das bei der Reduktion entstehende Wasser in flüssigem Aggregatzustand vorliegt.

4. Verfahren gemäß Anspruch 1, dadurch gekennzeichnet, daß man einem Festbetthydrierreaktor mit großer Flüssigkeitsbelastung verwendet, wobei man die Flüssigkeitsbelastung so einstellt, daß sie im Übergangsbereich zwischen Rieselbereich und pulsierender Strömung liegt.

## Claims

1. A process for the preparation of a catalyst containing one of the metals iron, cobalt or nickel, or a mixture or these, by reduction of the catalyst intermediate which contains one of the metal oxides in question, or a mixture of these, with hydrogen, wherein the reduction of the catalyst intermediate present in suspension is carried out at from 80 to 260°C and under from 1 to 300 bar, in the presence of a redox system.

2. A process as claimed in claim 1, wherein the redox system used comprises a pair of substances consisting of a straight-chain, branched or cycloaliphatic mono- or polyalcohol of not more than 8 carbon atoms and the associated mono- or polyaldehyde or -ketone.

3. A process as claimed in claim 1, wherein the temperature and pressure conditions are chosen so that the water formed during the reduction is present in the liquid state.

4. A process as claimed in claim 1, wherein a fixed-bed hydrogenation reactor having a high liquid loading is used, the liquid loading being set so that it is intermediate between the trickle range and pulsed flow.

## Revendications

1. Procédé de préparation de catalyseurs, contenant un des métaux fer, cobalt et nickel ou leur mélanges, par réduction par l'hydrogène d'un précurseur de catalyseur contenant un oxyde des métaux concernés ou de leurs mélanges, caractérisé en ce qu'on effectue la réduction du précurseur de catalyseur mis en suspension, à une température de 80 à 260°C et une pression de 1 à 300 bar en présence d'un système redox.

2. Procédé selon la revendication 1, caractérisé en ce qu'on utilise comme système redox un couple de composés formé d'un mono ou polyalcool à chaîne droits, ramifiée ou cycloaliphatique ayant jusqu'à 8 atomes de carbone et du mono ou polyaldéhyde correspondant ou de la mono ou polycétone correspondante.

3. Procédé selon la revendication 1, caractérisé en ce qu'on choisit les conditions de température et de pression pour que l'eau formée par la réduction se trouve à l'état liquide.

4. Procédé selon la revendication 1, caractérisé en ce qu'on utilise un réacteur d'hydrogénation à lit fixe avec une grande charge de liquide, en réglant la charge de liquide de telle sorte qu'elle se trouve dans la zone de transition entre le ruissellement et l'écoulement pulsé.